# EUROPEAN PATENT APPLICATION

(11) **EP 1 093 068 A2**
(43) Date of publication of application: **18.04.2001**
(21) Application number: 00203571.5
(22) Date of filing: 13.10.2000
(51) Int. Cl.: G06F 17/60

(54) **System and method for fund manager to broker matching**

(30) Priority: 15.10.1999 US 159656 P
(71) Applicant: Crossmar, Inc., New York, New York 10005 (US)
(72) Inventor: Hawkins, John G., Westfield, NJ 07090 (US)
(74) Representative: Hynell, Magnus

(57) **Abstract**

A method and system are described that allows fund managers and brokers to exchange messages so that they may buy, sell and allocate securities instruments. The fund manager creates a first message that the broker responds to and creates a second message. The two messages are matched so as to form a record of the securities transaction. Third parties may obtain access to the various messages to either observe the various stages of the transaction or provide authorization for the transaction to occur. Once a match has occurred, other messages are generated and forwarded to custodians and clearing agents so that the transaction may be settled. Finally, even after a match has occurred in a transaction, it is possible for an individual to request that that transaction be amended, cancelled or kept.

## Description

### PRIORITY DATA

This application claims priority to United States provisional application 60/159,656 filed on October 15, 1999 entitled "System and Method for Fund Manager to Broker Matching" the disclosure of which is herein incorporated by reference.

### FIELD OF THE INVENTION

The present invention relates to systems and methods for allowing fund managers to communicate with brokers who perform transactions that affect the portfolio the fund manager is managing. In a preferred embodiment, messages are transmitted between the fund manager and the broker that instruct how and when to make transactions and how and where settlement is to occur. These messages are then matched to form a complete record of the transaction.

### BACKGROUND OF THE INVENTION

With the advent of technology, it is becoming easier and more desirable for individuals to invest in a plurality of markets. One group of such individuals are fund managers who manage a portfolio of securities investments for a plurality of customers. These fund managers routinely make decisions on which securities to invest in for a particular portfolio. To maximize the value of some portfolios, some fund managers have taken to investing in securities traded in foreign markets. Trading in foreign markets provides a plurality of benefits.

Trading across different markets and different nationalities allows a fund manager to place the assets of the portfolio where they are likely to see the most growth. For example, if some securities markets in the United States are not strong at any particular time, the fund manager can decide to go heavily into Japanese securities markets if the Japanese economy is outperforming the United States' economy at that time.

Telephone and facsimile usage has allowed fund managers to get in contact with brokers who actually buy and sell securities. However, these types of communications are not ideal for today's fast markets. For example, telephone conversations require that both the fund manager and the broker be on the telephone at the same time. In foreign markets that may be more than twelve hours away from the fund manager's location, this is difficult on the fund managers and the brokers personally. Facsimiles eventually require routing of the paper documents to the fund managers and brokers individually. This does not solve the time differences between the locations of the fund mangers and brokers.

Electronic mail or email has solved some of these problems, yet email itself is not efficient. It is difficult for a fund manager to place a buy or sell order in front of a plurality of brokers and accept only one agreement to perform the transaction using email. In other words, even if the fund manager places a plurality of broker addresses in the "To" line of an email message, it is difficult for him/her to determine who is the first to respond with an acceptance of that order and thereby affirm the transaction and effect payment. In addition, email is not designed to track a transaction to provide either an audit trail from the beginning to the end of the transaction or allow third parties to unobtrusively view the status of a transaction.

### SUMMARY OF THE INVENTION

It is one possible advantage of the present invention to provide a fast system and method for fund managers and brokers to conduct transactions and settle these transactions as made. In addition, the present invention allows for fund managers, brokers and third parties to review the messages associated with any transaction for correctness and make corrections where necessary or affirm the transaction and its associated settlement if correct. This is accomplished by matching the appropriate messages so that the fund manager, broker or authorized third party may view all aspects of the transaction via the individual messages.

Another possible advantage of the present invention is to allow the fund manager the ability to establish tolerances in which matching of messages occurs. By giving the fund manager flexibility via selectable tolerances with respect to when various messages will be matched by the present invention, the fund manager may exercise greater control over how, when and under what parameters various transactions and settlements are carried out while maintaining the benefits of the speed desired in today's securities markets.

Another possible advantage of the present invention is the ability of either a fund manager or a broker to create new messages from existing messages. This allows either a fund manager or a broker to copy certain fields of data from an existing message and avoid the problems of making data entry errors and the inherent latency involved in manually typing in all required fields into a message.

Another possible advantage of the present invention is the ability to use data stored in a database to complete the required data fields in a message. This allows fund managers and brokers to create and respond to messages without having to type in all or any fields of data into the message.

Another possible advantage of the present invention is the ability to convert data so as to allow messages to be matched. As an example, some data in select data fields that is specific to one party is converted into other data in the same select data fields so that it can be read, understood and used by a second party.

Another possible advantage of the present invention is the ability of either a fund manager or a broker to establish rules and regulations within the present invention so that certain messages are routed to one another or other parties under certain circumstances including data input by one of the parties of the transaction or a third party.

### BRIEF DESCRIPTION OF THE DRAWINGS

The accompanying drawings, which are incorporated in and form a part of the specification, illustrate preferred embodiments of the present invention and, together with the description, disclose the principles of the invention. In the drawings:
Figure 1 is an overall system in accordance with a preferred embodiment of the present invention;
Figure 2 is a screen-shot from a software package that is can be used with an embodiment of the present invention;
Figure 3 is a flowchart of a process in accordance with a preferred embodiment of the present invention;
Figure 4 is a flowchart of a process in accordance with a preferred embodiment of the present invention;
Figure 5 is a screen-shot from a software package that is in accordance with a preferred embodiment of the present invention;
Figure 6 is a flowchart of a process in accordance with a preferred embodiment of the present invention;

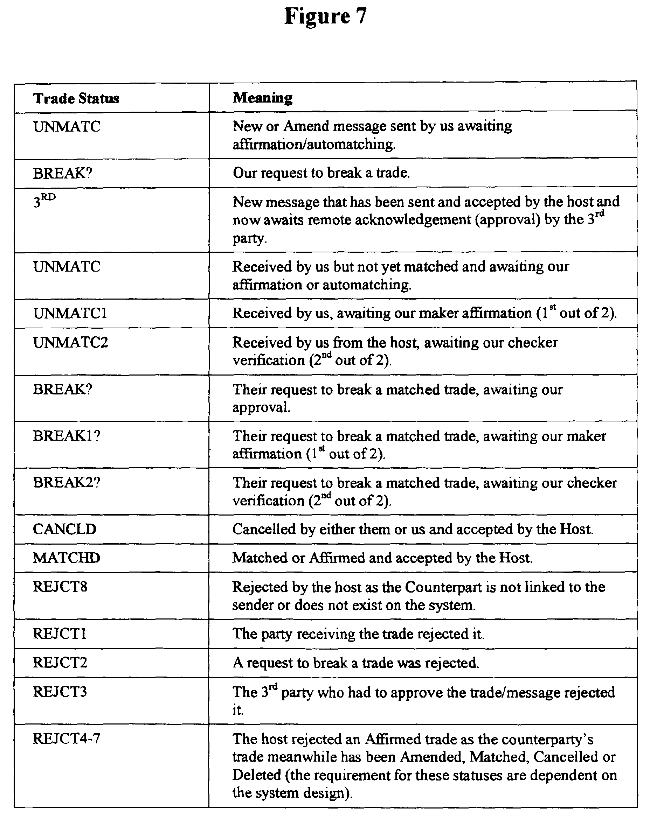

Figure 7 is a table of status codes that may used in an embodiment of the present invention;

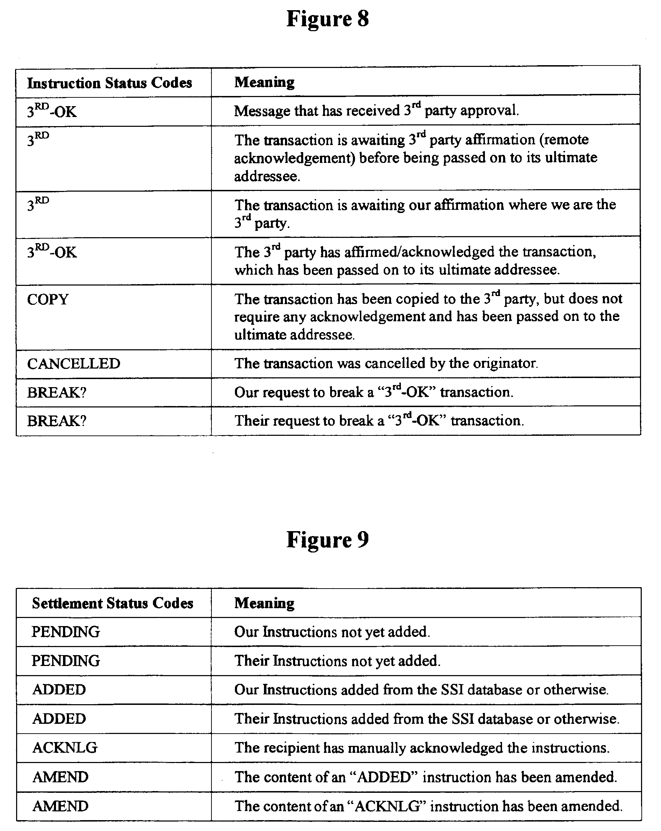

Figure 8 is a table of third party status codes that may be used in an embodiment of the present invention; and
Figure 9 is a table of status codes that relate to settlement instructions that may be used in an embodiment of the present invention.

### DETAILED DESCRIPTION OF THE DRAWINGS

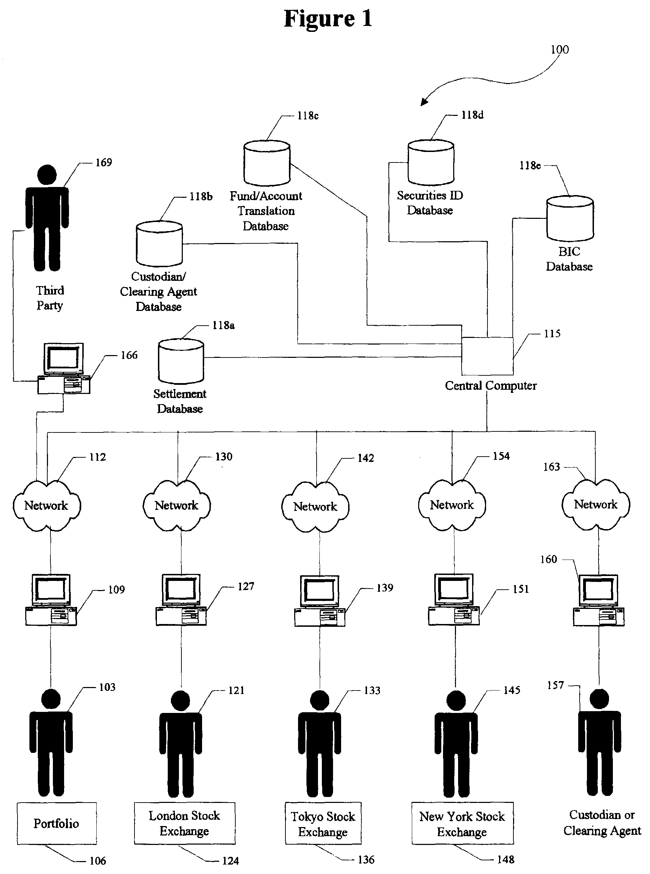

Figure 1 is an overview of a system 100 in accordance with a preferred embodiment of the present invention. As described above, a fund manager 103 (referred to as "FM" in subsequent figures) manages a portfolio 106 of securities. The fund manager reviews the individual securities within and markets in general outside of the portfolio, and makes decisions on whether to buy or sell securities to improve the overall performance of the portfolio. Fund manager 103 uses personal computer/workstation 109 to send and retrieve information. Fund manager computer 109 is coupled to a network 112. Network 112 acts as a conduit between fund manager computer 109 and central computer 115. Central computer 115 contains specific software modules that are used to accomplish the goals of the present invention. Coupled to central computer 115 are a plurality of databases 118a-118e. Database 118a stores securities instructions data so that some program modules in central computer 115 can execute properly.

Database 118b stores custodian and clearing agent data so that central computer 115 can route appropriate messages to the appropriate custodians and clearing agents. Database 118c stores translation data so that central computer 115 can translate proprietary fund manager data into a format that is compatible with a broker's proprietary data format, a third party's proprietary data format and/or a custodian's or clearing agent's proprietary data format. Database 118d stores security codes so that central computer 115 can search for an instrument by name or description and find transactions/messages associated with that security identification number. In addition, database 118d stores translation data so that messages with a first type of security code used by one type of party (i.e., United States) can be translated into a second type of security code used by a second type of party (i.e., Japan). Database 118e stores BIC data.

System 100 also contains London Stock Exchange broker 121. Broker 121 buys, sells and otherwise exercises trades on securities in the London Stock Exchange market 124. In system 100, broker 121 sends and receives information via personal computer/workstation 127. Like fund manager computer 109, broker computer 127 is coupled to a network 130. Network 130 is coupled to central computer 115.

Similar to broker 121, system 100 shows a broker 133 who works in the Tokyo Stock Exchange 136. He/she uses personal computer/workstation 139 and network 142 to send and receive data from central computer 115. Broker 145 trades on the New York Stock Exchange 148 and sends and receives data to and from central computer 115 via personal computer/workstation 151 and network 154. It should be noted that the markets shown in Figure 1 are merely descriptive and other markets such as commodities, federal debt, currency and derivative markets may also be implemented without departing from the scope of the present invention.

System 100 also includes a custodian and/or clearing agent 157. Custodian and/or clearing agent 157 uses personal computer/workstation 160 and network 163 to interface with central computer 115.

System 100 also contains a third party 169. These third parties usually have an interest in any transaction between a fund manager and a broker. Third party 169 gains access to central computer 115 via a personal computer/workstation 166 and network 112.

It should be noted that the number of networks need not correspond directly with the number of fund managers or markets in which the present invention is implemented. For example, networks 112, 130, 142, 154 and 163 could be implemented as a single network in an alternative embodiment.

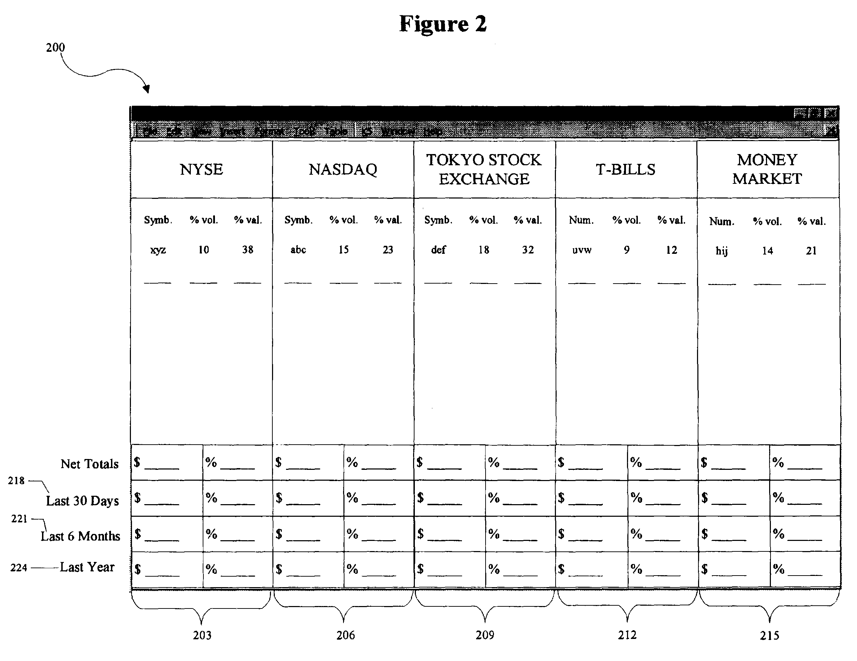

Figure 2 is an example of a screen-shot of a system that could be used with an embodiment of the present invention. Screen 200 is a breakdown of the various exemplary securities fund manager 103 manages in portfolio 106. The securities are organized into columns 203-215, based upon where those securities are traded. In the example shown in screen 200, securities are traded on the New York Stock Exchange (NYSE) 203, the NASDAQ 206, the Tokyo stock market 209, the Federal bond market 212 and a money market 215.

Rows 218-224 across the bottom of screen 200 show how the various markets are doing with respect to the past 30 days, 6 months or 1 year ago. This summary information allows fund manager 103 either to buy more of a security if he/she feels that its status is improving or to sell it if it is doing worse.

In addition to obtaining this information, fund manager 103 also obtains information from a plurality of markets. For example, if the fund manager were interested in following the NYSE, he/she would also receive information about other companies and where their movements have been with respect to their stock value in the market, and thus get a sense of whether an entire market is rising or falling so that funds can be allocated appropriately.

With the information that is internal to the portfolio, an example being shown in Figure 2, coupled with information that is provided to fund manager 103 that is external to the portfolio, the fund manager 103 may decide if he/she wishes to purchase or sell any of the securities to improve the performance of the portfolio 106.

In addition to fund manager 103 making decisions on when and how much of a security to buy or sell based on security and market performance, the fund manager also receives buy and sell instructions from customers or part owners of the fund. For example, suppose a customer decides to purchase a house and wants to liquidate his/her assets in the fund so as to make a down payment on the house. The fund manager 103 will need to sell securities in the multiple markets in order to obtain the capital to turn over to the customer. In this example, fund manager 103 will sell a certain percentage of each security in order to liquidate that customer's interest in the fund.

### ORDER AND CONFIRMATION

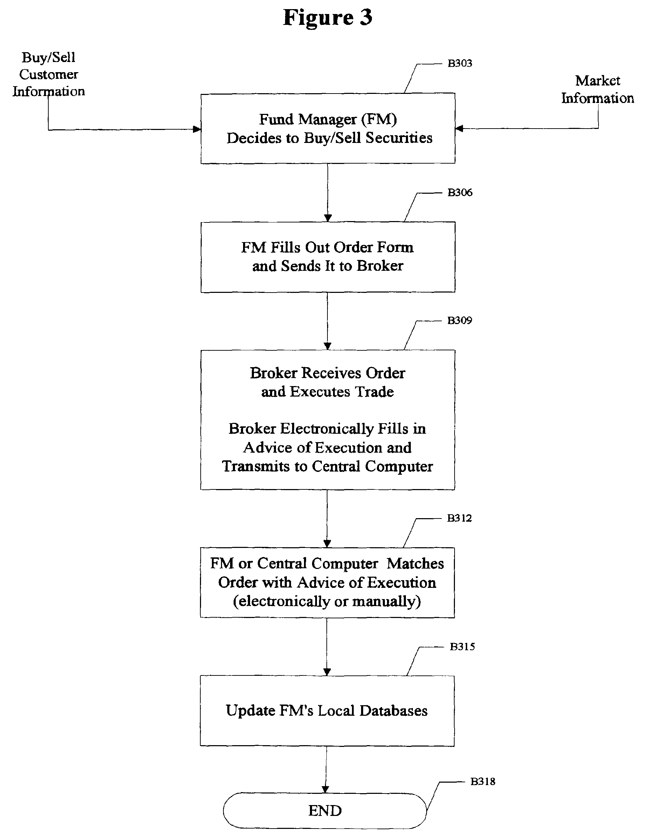

Figure 3 is a flowchart showing a process for executing a transaction using an embodiment of the present invention. Beginning at block B303, fund manager 103 decides to buy or sell some portion of securities in the portfolio. Fund manager 103 comes upon this decision by receiving buy/sell instructions from a customer or from external market information that indicates that one portion of the portfolio is doing better/worse than expected.

At block B306, fund manager 103 transmits a buy/sell order to a broker. This order can be completed in any of a plurality of ways. Traditionally, this order is placed by having fund manager 103 call the broker and orally instruct him/her to make the transaction. In alternative embodiments, fund manager 103 can fill out a paper buy/sell order and send it via facsimile to a broker. In yet alternative embodiments, fund manager 103 transmits an email message or a SWIFT-compatible message to a broker instructing that broker on the amount and type of transaction desired. Whatever method fund manager 103 chooses to use to submit an order, it is forwarded to the appropriate broker in block B306.

At block B309, the broker receives the order and executes the requested transaction. After the broker makes the requested transaction, he/she enters the advice of execution. This is a message, typically electronic, that is forwarded to central computer 115. The advice of execution contains the actual price paid or received for the securities bought or sold, the number of securities transacted and the date of the transaction among other fields of data. It should also be noted that the broker may be unable to complete a whole transaction as specified in the order received from fund manager 103. For example, the broker may only be able to sell 50 shares of a stock at $25 per share instead of the requested 100 shares at $25 per share. Alternatively, the broker may only be able to buy shares at the high end of the range given by fund manager 103, but this may result in the purchase of fewer shares than originally requested if the total dollar amount is used as the controlling criteria (i.e., buy as many shares as possible within the range of $80-$85, without exceeding a maximum dollar amount of $1,000). Finally, after the advice of execution is drafted by the broker, it is forwarded to central computer 115 for matching by central computer 115 and later affirmation by fund manager 103.

At block 312, fund manager 103 receives the advice of execution from central computer 115. The advice of execution must then be matched with the order so that the records are complete as to when the request for transaction was made and when the transaction was actually completed. If fund manager 103 did not send an electronic message as an order to the broker via central computer 115, it follows that central computer 115 will not have a record of that order. In this scenario, fund manager 103 must manually match the order he/she placed with the return advice of execution sent by the broker via central computer 115 to fund manager computer 109. Alternatively, if fund manager 103 did use an electronic order form and sent it to a broker via central computer 115, then central computer 115 would have a record or copy of this order message being sent from fund manager 103 to the broker. In either event, either fund manager 103 or central computer 115 matches the order and the corresponding advice of execution so that there is a complete record of the entire transaction.

When matching, central computer 115 will compare the two messages and make sure that key data elements (fields) are identical or within tolerance levels. The system will allow the fund manager some flexibility to tailor the matching to fit with his individual requirements.

The fund manager 103 may set tolerances within which an automatch will occur by central computer 115. In a preferred embodiment, tolerances can only be applied to numerical fields, including %. Tolerances may be set as % deviation, including from underlying % figures, or absolute numbers deviation. The latter may be defined by currency and also be applied to % where applicable. As the tolerances will be set by the fund manager, the trade, when it is being matched, will carry the broker's value(s).

The fund manager will have a "View Tolerance Adjustments" option in his GUI. It will allow him to view any adjusted fields, and by right-clicking the mouse over them to also see his original input, the adjusted value and the difference, including a +/- to indicate whether he gained or lost as part of the adjustment.

At block B315, fund manager software on computer 109 updates the status of the portfolio (i.e., how much of each security is in the portfolio) based upon the advice of execution. At block B318, the process ends.

It should be noted that the above described process matches corresponding messages to a single trade. It is also within the present scope of the invention for one party, either the fund manager or the broker, to manually affirm the other's message (i.e., via a facsimile) as long as the request for a trade is unmatched at the time of the facsimile. It is then at the discretion of the party who created the message to either affirm it with another message to central computer 115 or amend the first message as will be described later.

The matching in block B312 can be done to give both the fund manager and the broker flexibility in the trading of instruments. This is mainly done by having various fields that are either required to be matched by the messages transmitted between the parties for a transaction to occur or which may be optionally matched by the messages transmitted between the parties. For example, in one alternative, referred to as blind matching, both parties keep their identity from the other. Thus, each party forms an agreement to carry forward this transaction without knowing the identity of the other party. This type of matching is called blind matching and is accomplished by having both parties select the option to keep their respective identities from each other until the transaction is complete. Blind matching is advantageous in that it prevents either party from taking advantage of the other party in certain situations. If the blind matching is carried out to a further degree, it is possible for one party to withhold other details of the transaction (i.e., the settlement) from the other unless the withholding party agrees to send status messages to the other party. This type of trading is called one-sided trading because only one side knows all of the details of the transaction.

Using SWIFT format messages, central computer 115 will match the following messages together:

| | | |
|---|---|---|
| Order Matching | MT502 | MT513 |
| Allocation Matching | MT514 | MT515 |
| Settlement Matching | MT520 | MT530 |
| Settlement Matching | MT521 | MT531 |
| Settlement Matching | MT522 | MT532 |
| Settlement Matching | MT523 | MT533 |

Fund management firms may also establish rules for what fields are required to be matched so that their individual fund managers can not establish optional matching fields. In a typical embodiment, these rules are stored in a local database at the fund managing firm and the created messages cannot exit the fund managing computer network to get to central computer 115 until the messages match the criteria established in this database.

Beyond the flexibility in how trade messages are matched, once a trade is matched, it can be broken or amended by the parties. Thus, each party may elect to either amend, cancel or keep the trade once it is matched by central computer 115. If both parties elect to keep the matched trade, then it will immediately be automatched by central computer 115. If either party wants to cancel the matched trade, it must receive permission from the other party to cancel that trade. When one party sends a message to the other party indicating that he/she is desirous of amending or canceling a matched trade, the receiving party may view other information regarding other pending and matched trades involving the amending party and use that information in deciding if he/she will agree to amend or cancel that particular trade. It should also be noted that if a trade is authorized by a third party, as will be described later, that third party must authorize an amendment or cancellation of the matched trade.

If both parties agree to cancel a trade, then both messages from both parties will be unmatched and thus free to be matched again either manually or via an automatch by central computer 115.

The present invention also allows for a broker to send multiple part fills relating to one block order from fund manager 103 in the form of a notice of execution message (in the SWIFT format this is an MT513 message). Fund manager 103 may manually affirm each of these part fills or he/she may create and upload the files or SWIFT messages directly. The part fills executed by the broker will all link to the same order reference number generated by fund manager 103.

When several part fills combine to complete an order from fund manager 103, central computer 115 will automatically convert the plurality of part fills into a complete advice of execution message as a substitute for the plurality of messages required to match-up for all of the part fills. The part fills are linked to the advice of execution message and be retrieved by the parties but will not be matched by central computer 115 as they have been replaced by an encompassing corresponding message. This causes the trade status of the part fills to be designated as averaged.

Examples of data fields that a party may enter and may keep optional or require to be mandatory include status, trade date range, settlement date range, fund name or number or account name or number, country of trade, country of settlement, name of other party and identification of custodian or clearing agent (for certain messages only).

### ALLOCATION

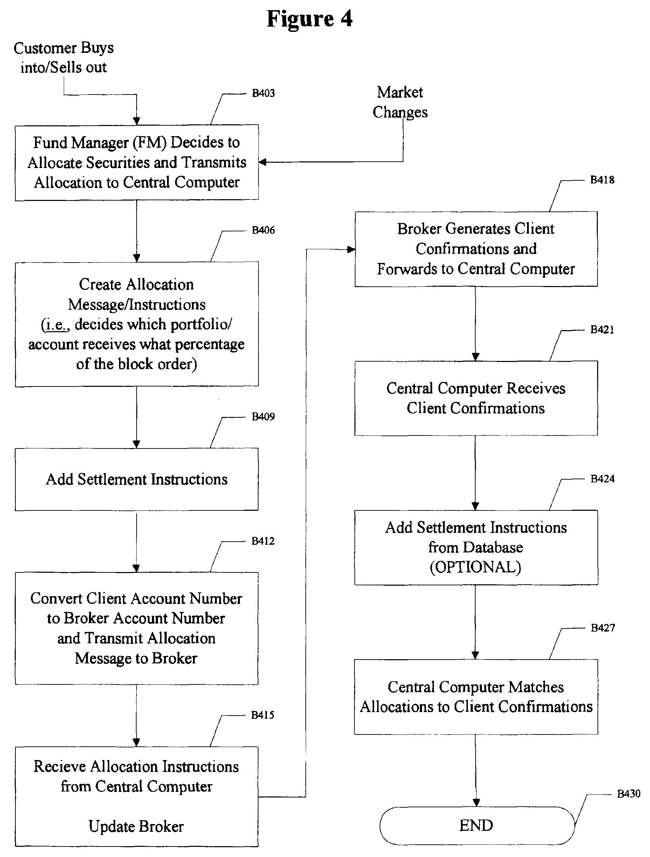

In addition to buying and selling securities, an embodiment of the present invention is used to redistribute securities within a portfolio. The process for accomplishing this aspect of the present invention is shown in Figure 4. In block B403, fund manager 103 decides to reallocate resources in the portfolio. This decision can be spurred in a plurality of ways. Two ways are shown in Figure 4. In the first way, the client or owner of the securities portfolio contacts fund manager 103 and instructs him/her to reallocate resources in the portfolio. More specifically, fund manager 103 is instructed to sell a portion of one or more security and use the proceeds to buy into one or more of a different security by the customer or client. In this example, the fund would only be owned by one customer and would not be a mutual fund.

Another way that fund manager is persuaded to reallocate funds depends upon the activity in any of the various markets. If the fund manager believes that one portion of the portfolio is performing better than another, he/she may decide to sell off lower producing portions of the portfolio to generate funds to purchase securities in higher performing securities.

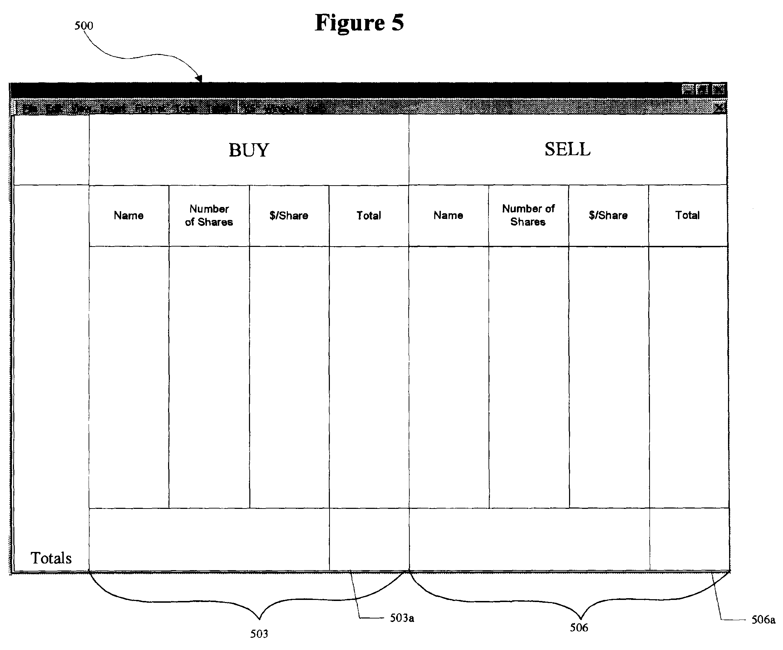

Once fund manager 103 decides to request a broker to perform an allocation, or reallocation of funds in the portfolio, fund manager 103 must request that broker(s) perform the necessary transactions. At block B406, fund manager 103 creates an allocation request. There are a plurality of methods a fund manager may use to request a broker to perform an allocation. In one method, fund manager 103 fills in an empty screen like the one shown in Figure 5. More specifically, Figure 5 is a screen-shot used for data collection at fund manager computer 109 when fund manager 103 requests to perform an allocation. Fund manager 103 fills in the items in the "Buy" columns 503 and the "Sell" columns 506. Sub-columns 503a and 506a produce currency totals so that the amount of securities sold is enough to at least cover the purchase price of the securities bought. After fund manager 103 fills in the screen, a file is generated and transmitted to central computer 115 by fund manager computer 109. In an alternative embodiment, a SWIFT message is generated indicating the fund manager's allocations.

In another embodiment, fund manager 103 buys a block order of a single security using the process described in conjunction with Figure 3, as an example. In a preferred embodiment, using that process causes an order SWIFT message, MT502, and an advice of execution SWIFT message, MT513, to be generated. Once fund manager computer 109 receives the advice of execution message, fund manager 103 allocates the block of securities into a plurality of accounts until the entire block is distributed.

It should be noted in many of the above circumstances, the fund manager is presented with a table with columns for the fund/account and the quantity in percentage and absolute figures. The fund manager may then allocate the quantity of instruments either as a percentage of the figure in the underlying trade or may fill in absolute numbers. With percentages, central computer 115 calculates the absolute figure once the full 100% allocation has been made, ensuring that the data is correct.

After the allocation messages have been created, settlement instructions may optionally be added to allocation messages at block B409. There are a plurality of ways in which settlement instructions may be added to the allocation messages. In one embodiment, fund manager 103 manually adds settlement instructions to the allocation messages. In yet another embodiment, central computer 115 automatically adds settlement instructions that are stored in database 118a. Database 118a selects the appropriate settlement instructions that are associated with both/either the fund managers and the brokers as their standard settlement instructions for particular securities transactions. The data in the messages will determine which set of settlement instructions are to be attached.

At block B412, central computer 115 receives the allocation messages and converts the individual client/customer account numbers into fund manager account numbers. This can simply be done by using a look-up function associated with database 118c, where each client number is stored in association with the fund manager's account number who handles the customer's portfolio. This conversion establishes block orders, as organized by fund manager account numbers, for the brokers to operate upon.

After the conversion, the allocation message(s) is transmitted from fund manager computer 109 to broker computer (i.e., computer 124) via central computer 115 and the associated networks 112 and 127 in block B412.

At block B415, the broker computer receives the allocation messages from central computer 115 via the corresponding network. Upon receipt, the broker computer updates its local database so that the data in the local database parallels the data in the local database associated with computer 109 (not shown in Figure 1). The purpose of this is so that when the fund manager 103 executes another transaction, the broker can immediately review the data in the local database to determine if the requested transaction can be performed (i.e., selling securities presently owned by a customer of fund manager 103).

At block B418, the broker creates a confirmation message using his/her broker computer. The broker computer then forwards the confirmation message to central computer 115, also in block B418. At block B421, central computer 115 receives the confirmation message from the broker computer.

At block B424, central computer 115 adds settlement instructions retrieved from database 118a. It should be noted that this block is optional in that the settlement instructions may be added into the confirmation message by the broker using his/her broker computer. (See block B409). At block B427, central computer 115 matches the allocation messages with the corresponding confirmation messages so as to form a complete record of the transaction. At block B430, the process ends.

### SETTLEMENT

Once either buy/sell orders or allocations are matched with the proper response messages from a broker, central computer 115 then proceeds into the settlement phase of operation. Settlement is the actual paying for the securities purchased or passing the proceeds on to the fund manager from a sale of securities. The fund manager then passes on the proceeds, or collects the money from the customer for forwarding on to the broker in accordance with settlement instructions. Either the fund manager 103 or the broker may have unique rules, regulations or methods in which settlement is to be performed as well as the timing of settlement. In addition, the type of currency, and the financial institution and the account in which the funds are to be deposited or withdrawn may form a part of the settlement instructions.

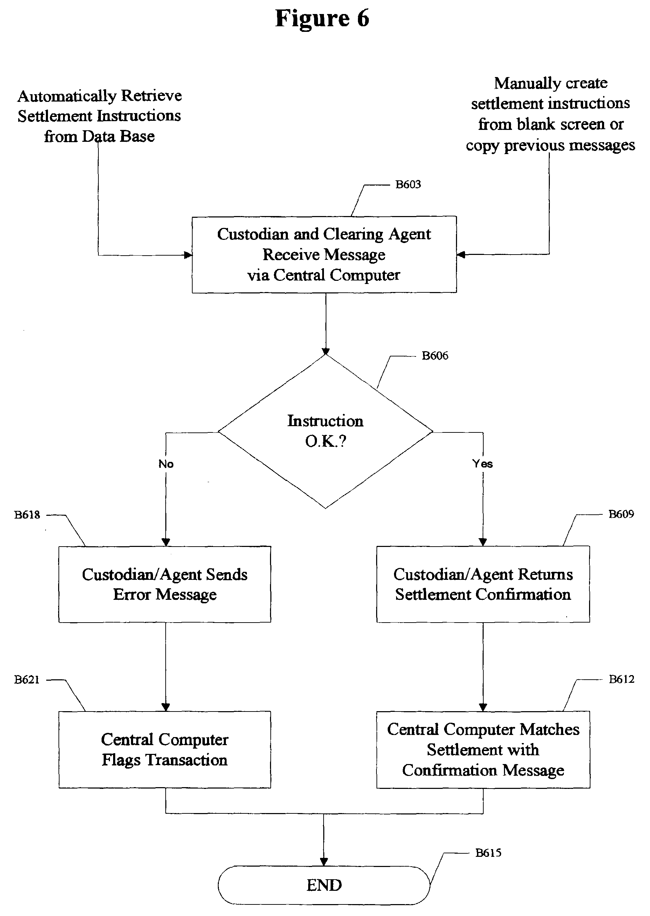

A process of settling a transaction in accordance with a preferred embodiment of the present invention is shown in Figure 6. At block B603, central computer 115 generates custodian and clearing agent messages when instructed to do so. As examples, there are two occasions when central computer 115 will generate these types of instruction messages. A first exemplary way of creating settlement instructions is to have either fund manager 103 or a broker enter the settlement instructions into a blank screen from scratch. Such a process typically involves providing either the fund manager 103 or the broker with a graphic user interface (GUI) that includes a simple text box along with identifying tags so that the corresponding messages generated by central computer 115, which will be described later, are forwarded to the correct parties. In another manual way of creating settlement instructions, either the fund manager, broker or both copies an existing message, such as from a newly created or matched allocation message (like an MT514 or MT515 in the SWIFT platform) and adds the missing data to those messages to as to generate a complete settlement message. In a second exemplary method, central computer 115 is programmed to automatically generate settlement instructions whenever it receives an allocation message or matches an allocation with a client confirmation message.

Regardless of how a settlement instruction is generated, it is received by the central computer 115 at block B603, unless it already exists via automatic generation. Upon receipt or generation, central computer 115 forwards the settlement instructions to either a custodian, clearing agent or both, as is required by the type of transaction and security involved. Again, there are a plurality of ways in which these instructions are forwarded. In one example, central computer 115 automatically forwards the messages to custodians and clearing agents upon receipt or generation. Thus, it is inherent in this method that the address of the custodian or clearing agent is within the message received or generated by central computer 115 (i.e., database 118b). In an alternative embodiment, the settlement messages received by central computer 115 that are destined for custodians and clearing agents are temporarily stored in a memory buffer (not shown in Figure 1) until the custodians and clearing agents log onto central computer 115 to retrieve the messages stored in the buffer for them.

At block B606, the custodians and clearing agents who receive settlement instructions from central computer 115 determine if the settlement procedures can be or are actually completed as outlined in the settlement instructions. If the settlement instructions can be followed by the recipient custodian or clearing agent, then the process continues at block B609. At block B609, the recipient custodian or clearing agent returns a settlement confirmation message to central computer 115. In SWIFT, this type of message is referred to as an MT53x message where different digits in the "x" position distinguish different settlement confirmation messages from one another. At block B612, central computer 115 matches the recipient confirmation message (i.e., MT53x) with the original settlement instruction message (i.e., MT52x) so as to form a complete record of the settlement instructions and acknowledgements for auditing purposes. At block B615, the process ends.

If at block B606 the recipient custodian or clearing agent could not understand the settlement instructions nor implement the settlement instructions then the custodian or clearing agent uses his/her computer 166 to generate an error message (i.e., an MT534 message in SWIFT) at block B618. At block B621, central computer 115 then flags that transaction and allows for free-format text messages to be sent between the various parties to resolve the problem. The process then ends at block B615. It should be noted that if the error is corrected, this transaction can be settled, and the correct messages generated and matched by going through the process at Figure 6 again.

The SWIFT MT514/515 messages do not allow for the return of the counter party's instruction by the receiver so there is no basis for automatching. However, central computer 115 will allow for the trade details to be affirmed through the GUI. Central computer 115 will also ensure that any changes to the data in the settlement database 118a are communicated to the counterpart. Central computer 115 also checks the settlement details of both parties with those in the settlement database 118a at the time of an automatch. In case a change to the data in the settlement database 118a has occurred after the 514/515 was originally populated then the relevant instruction status code will turn to amended.

In a preferred embodiment, the details of the settlement instructions will be attached to the MT52x messages by the central computer 115 by the party giving the instructions to the central computer 115. Where there is more than one addressee, the GUI will not process the message but will provide the party with a list of the alternatives and ask him/her to make a choice. In addition, the party may view the database 118a in the form of a table, where the user may sort according to the content as well as the specific data fields in a message, sometimes referred to as keys, that correspond to associating selected settlement instructions to a message. The party may also copy and paste within the settlement instructions data table in database 118a in order to amend records and create new records. If a change is made to a fund number, account number, name, custodian/clearing agent name or address, then the party should have the option to make the change apply to one or several of the other records in database 118a where similar data records are kept.

### THIRD PARTY ACCESS

In certain types of securities transactions, a third party 169 receives messages regarding the status of a transaction between a fund manager and a broker. Examples of third parties include trustees, plan sponsors and heads of offices where the fund manager 103 or broker work. Some of the third parties may optionally be given the authority to approve a transaction before it is executed or settled. When a message is created by either a fund manager 103 or a broker, the third party 169 is given a copy of that message to review. In alternative embodiments, select third parties 169 are given access to central computer 115 and review the messages stored therein when the third parties 169 log-in to central computer 115. It should also be noted that in alternative embodiments of the present invention, third parties 169 may receive the status messages and transaction messages via facsimile, email or telephone.

It should be noted that the above embodiments were chosen and described in order to explain the principles of the invention and their practical applications, so as to enable others skilled in the art to utilize the invention and various embodiments with various modifications as are suited to the particular use contemplated.

As an example, while the above invention has been described to operate on equities, fixed income, derivatives and money market instruments, it would be within the scope of the present invention to modify the above embodiments to operate with other instruments and securities such as stocks, federal treasury bills and the like.

In addition, while a preferred embodiment of the present invention uses messages in the SWIFT format, it is within the scope of the present invention to use other types of data formats, such as direct input from a user in a graphical user interface (GUI) format or stored files in a tab-delimited format. If formats other than the SWIFT format are used, the present invention will preferably parse and convert those non-SWIFT formatted data inputs into SWIFT compatible messages in accordance with a preferred embodiment of the present invention. It is also within the scope of the present invention to have a plurality of individuals within a single firm use different formats of data to interface with the functionality of central computer 115.

It should be noted in all of the securities capable of being transacted using an embodiment of the present invention, that, depending on the security being traded, different fields within a group of messages will be required to be matched. With this constraint, one embodiment of the present invention implements a plurality of software modules that perform basic functions (i.e., matching) within larger modules that are specifically designed for trading one type of security. As separate modules, when a fund manager logs onto computer 115, he/she will have to decide which of the plurality of security instruments he/she wishes to trade and access the corresponding software module to execute the trade and receive properly matched messages.

In yet another embodiment, the broker may, in the GUI, create an averaged trade from a part fill and its preceding part fills subject to (a) the transactions not being matched, (b) the transactions not having previously been averaged and (c) key fields being identical in affected part fills. Thus, affected part fills will remain for the record in central computer 115 with the trade status "averaged" and will be linked to the newly created trade record but may no longer be matched. In case the part fills do not make up a complete order, as can be seen from the content of the message, the broker will receive a message in the GUI asking whether the operation should be aborted.

## Claims

1. A computer implemented method for creating a complete record of a transaction comprising:
receiving an order message from a fund manager;
forwarding the order message to a broker;
receiving an advice of execution message from the broker; and
matching the order message with the advice of execution message so as to form a complete record of the transaction.

2. The computer implemented method of claim 1 further comprising:
receiving a settlement instruction message that corresponds to the order and advice of execution messages;
forwarding the settlement instruction message to a custodian;
receiving a confirmation message that corresponds to the settlement instruction message from the custodian; and
matching the settlement instruction message and the confirmation message.

3. The computer implemented method of claim 1 wherein the matching of the order message with the advice of execution message is done based upon certain data fields in both the order message and the advice of execution message correlating.

4. The computer implemented method of claim 3 wherein the data field correlation is within a specified tolerance.

5. The computer implemented method of claim 1 wherein copies of the order message and the advice of execution message are forwarded to a third party.

6. The computer implemented method of claim 5 wherein the matching of the order message with the advice of execution message is done based upon authorization being received from the third party.

7. The computer implemented method of claim 1 wherein either the order message or the advice of execution message contains data copied from a previous message.

8. The computer implemented method of claim 1 wherein a data field in the order message is translated from a first format to a second format before it is forwarded to the broker.

9. The computer implemented method of claim 1 further comprising:
receiving an amend or cancel message from the fund manager;
reporting the amend or cancel message to the broker; and
amending or canceling the matching of the order message and the advice of execution message.

10. A computer implemented method for creating a complete record of a transaction comprising:
receiving an allocation message from a fund manager;
forwarding the allocation message to a broker;
receiving an client confirmation message from the broker; and
matching the allocation message with the confirmation message so as to form a complete record of the transaction.

11. The computer implemented method of claim 10 further comprising:
receiving a settlement instruction message that corresponds to the allocation and confirmation messages;
forwarding the settlement instruction message to a custodian;
receiving a confirmation message that corresponds to the settlement instruction message from the custodian; and
matching the settlement instruction message and the confirmation message.

12. The computer implemented method of claim 10 wherein the matching of the allocation message with the confirmation message is done based upon certain data fields in both the allocation message and the confirmation message correlating.

13. The computer implemented method of claim 12 wherein the data field correlation is within a specified tolerance.

14. The computer implemented method of claim 10 wherein copies of the allocation message and the confirmation message are forwarded to a third party.

15. The computer implemented method of claim 14 wherein the matching of the allocation message with the confirmation message is done based upon authorization being received from the third party.

16. The computer implemented method of claim 10 wherein either the allocation message or the confirmation message contains data copied from a previous message.

17. The computer implemented method of claim 10 wherein a data field in the allocation message is translated from a first format to a second format before it is forwarded to the broker.

18. The computer implemented method of claim 10 further comprising:
receiving an amend or cancel message from the fund manager;
reporting the amend or cancel message to the broker; and
amending or canceling the matching of the allocation message and the confirmation message.

19. Receiving electromagnetic radiation that indicates the occurrence of the method of:
receiving an order message from a fund manager;
forwarding the order message to a broker;
receiving an advice of execution message from the broker; and
matching the order message with the advice of execution message so as to form a complete record of the transaction.

20. Receiving electromagnetic radiation that indicates the occurrence of the method of:
receiving an allocation message from a fund manager;
forwarding the allocation message to a broker;
receiving an client confirmation message from the broker; and
matching the allocation message with the confirmation message so as to form a complete record of the transaction.
